# EUROPÄISCHE PATENTSCHRIFT

(11) **EP 3 565 750 B1**
(45) Veröffentlichungstag und Bekanntmachung des Hinweises auf die Patenterteilung: **30.09.2020**
(21) Anmeldenummer: 18704435.9
(22) Anmeldetag: 23.01.2018
(51) Int. Cl.: B60M 1/30, B61L 15/00, B60M 3/04

(54) **ANORDNUNG UND VERFAHREN ZUM ABSCHALTEN EINER TRAKTIONSSPANNUNG**
ARRANGEMENT AND METHOD FOR SWITCHING OFF A TRACTION VOLTAGE
DISPOSITIF ET PROCÉDÉ DE COUPURE D'UNE TENSION DE TRACTION

(30) Priorität: 28.02.2017 DE 102017203186
(43) Veröffentlichungstag der Anmeldung: 13.11.2019
(73) Patentinhaber: Siemens Mobility GmbH, 81739 München (DE)
(72) Erfinder: KOHLRUSS, Jacob Johannes, 38116 Braunschweig (DE)
(86) Internationale Anmeldenummer: PCT/EP2018/051558
(87) Internationale Veröffentlichungsnummer: WO 2018/158006

(56) Entgegenhaltungen:
- EP-A1- 3 069 918
- WO-A2-2013/045242
- US-A1- 2014 042 279
- FRANZ KURZWEIL: "Sichere Freischaltung von Oberleitungen- System OLSIG", SIGNAL + DRAHT, DVV, Bd. 105, Nr. 9, 1. September 2013 (2013-09-01), Seiten 10-15, XP001583675, ISSN: 0037-4997

## Beschreibung

Die Erfindung bezieht sich auf eine Anordnung mit einer streckenseitigen Abschalteinrichtung, die bei Anliegen eines Abschaltsignals eine an einer Fahrzeugstrecke oder an einem Abschnitt eines Streckennetzes anliegende Traktionsspannung abschaltet, und mit zumindest einem auf der Fahrzeugstrecke oder dem Abschnitt des Streckennetzes befindlichen Fahrzeug. Derartige Anordnungen sind im Bereich der Eisenbahntechnik bekannt.

In der Zeitschrift "Signal + Draht", Band 105, Nr.9, wird in dem Artikel "Sichere Freischaltung von Oberleitungen - System OLSIG" eine Anordnung mit den Merkmalen des Oberbegriffs des vorliegenden Patentanspruchs 1 beschrieben.

Der Erfindung liegt die Aufgabe zugrunde, eine Anordnung anzugeben, bei der die Umsetzung eines Abschaltbefehls zum Abschalten der Traktionsspannung besonders zuverlässig bzw. sicher überwacht werden kann, beispielsweise um zu vermeiden, dass Unfälle eintreten können, wenn ein Spannungsabschaltbefehl nicht umgesetzt worden ist und Wartungsarbeiten bei nicht abgeschalteter Traktionsspannung durchgeführt werden. Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass eine streckenseitige Leitstelle der Anordnung mit dem zumindest einen Fahrzeug in einer Kommunikationsverbindung steht und von diesem im Falle abgeschalteter Traktionsspannung eine Traktionsspannungsabschaltinformation erhält und die streckenseitige Leitstelle derart ausgebildet ist, dass sie ein eine Traktionsspannungsfreiheit anzeigendes Freigabesignal in Abhängigkeit von einer oder mehreren Traktionsspannungsabschaltinformationen erzeugt.

Ein wesentlicher Vorteil der erfindungsgemäßen Anordnung ist darin zu sehen, dass die Umsetzung eines Abschaltbefehls zum Abschalten der Traktionsspannung unabhängig vom Abschaltpfad überwacht wird, nämlich über einen separaten Rückmeldepfad, der zwischen der streckenseitigen Leitstelle und zumindest einem auf der Strecke bzw. auf dem Streckennetz fahrenden Fahrzeug gebildet wird. Der vom Abschaltpfad unabhängige Rückmeldepfad ermöglicht in einfacher Weise eine unabhängige Kontrolle darüber, dass die Strecke tatsächlich spannungsfrei ist, nachdem der Abschaltbefehl abgesetzt worden ist.

Ein weiterer wesentlicher Vorteil der erfindungsgemäßen Anordnung besteht darin, dass bei Vorhandensein eines signaltechnisch sicheren bzw. einen hohen Sicherheitsstandard aufweisenden Rückmeldepfads der Abschaltpfad zum Übertragen des Abschaltsignals einen geringen Sicherheitsstandard aufweisen kann und somit besonders kostengünstig realisiert werden kann.

Die Anordnung kann prinzipiell alle Arten von Fahrzeugen umfassen. Als vorteilhaft wird es angesehen, wenn es sich bei dem oder den Fahrzeugen um elektrisch mittels der Traktionsspannung angetriebene Fahrzeuge, insbesondere elektrisch angetriebene Schienenfahrzeuge handelt, insbesondere für den Personennah- oder Personenfernverkehr. Mit anderen Worten handelt es sich bei der Anordnung vorzugsweise um eine eisenbahntechnische Anordnung für bzw. mit Eisenbahnzügen.

Bezüglich der Ausgestaltung der streckenseitigen Leitstelle wird es als vorteilhaft angesehen, wenn diese derart ausgebildet ist, dass sie das Freigabesignal erzeugt, wenn eine Mindestanzahl an auf der Fahrzeugstrecke oder dem Abschnitt des Streckennetzes befindlichen Fahrzeugen eine Traktionsspannungsabschaltinformation an die streckenseitige Leitstelle senden.

Vorteilhaft ist es auch, wenn die streckenseitige Leitstelle derart ausgebildet ist, dass sie das Freigabesignal nur erzeugt, wenn nach der Erzeugung des Abschaltsignals innerhalb einer vorgegebenen Zeitspanne eine Mindestanzahl an auf der Fahrzeugstrecke oder dem Abschnitt des Streckennetzes befindlichen Fahrzeugen eine Traktionsspannungsabschaltinformation an die streckenseitige Leitstelle sendet.

Die Mindestanzahl ist bevorzugt 2 oder größer.

Auch ist es von Vorteil, wenn die streckenseitige Leitstelle derart ausgebildet ist, dass sie das Abschaltsignal selbst erzeugt und an die Abschalteinrichtung übermittelt und nachfolgend den Empfang von Traktionsspannungsabschaltinformationen der Fahrzeuge überwacht.

Die streckenseitige Leitstelle und die Abschalteinrichtung bilden vorzugsweise einen Abschaltpfad.

Die streckenseitige Leitstelle und das zumindest eine Fahrzeug bilden vorzugsweise einen Rückmeldepfad.

Das zumindest eine Fahrzeug ist vorzugsweise ein spurgebundenes Fahrzeug, insbesondere ein Schienenfahrzeug, und der Rückmeldepfad wird vorzugsweise durch ein automatisches Zugkontroll- und/oder Zugsteuerungssystem gebildet.

Der Rückmeldepfad ist bevorzugt signaltechnisch sicherer als der Abschaltpfad ausgestaltet.

Der Rückmeldepfad erfüllt bevorzugt zumindest den Sicherheitsstandard SIL4.

Der Abschaltpfad kann den Sicherheitsstandard SIL4 unterschreiten, insbesondere wenn der Rückmeldepfad bereits den Sicherheitsstandard SIL4 erfüllt.

Insgesamt ist es von Vorteil, wenn die durch den Abschaltpfad und den Rückmeldepfad gebildete

Traktionsabschaltfunktionalität zumindest den Sicherheitsstandard SIL4 erfüllt.

Das oder die Fahrzeuge sind bevorzugt derart ausgestaltet, dass sie unaufgefordert, insbesondere regelmäßig, Statusinformationen an die Leitstelle übersenden, die zumindest auch das Anliegen oder Fehlen von Traktionsspannung betreffen.

Zusätzlich oder alternativ kann vorgesehen sein, dass das oder die Fahrzeuge derart ausgestaltet sind, dass sie nach Empfang einer leitzentralenseitigen Anfrage eine Statusinformation an die Leitstelle übersenden, die zumindest auch das Anliegen oder Fehlen von Traktionsspannung betrifft.

Die Erfindung bezieht sich darüber hinaus auf eine streckenseitige Leitstelle. Erfindungsgemäß ist bezüglich einer solchen Leitstelle vorgesehen, dass diese dazu ausgebildet ist, mit zumindest einem auf einer Fahrzeugstrecke oder einem Abschnitt eines Streckennetzes befindlichen Fahrzeug in einer Kommunikationsverbindung zu stehen und von diesem im Falle abgeschalteter Traktionsspannung eine Traktionsspannungsabschaltinformation zu erhalten sowie ein eine Traktionsspannungsfreiheit anzeigendes Freigabesignal in Abhängigkeit von einer oder mehreren erhaltenen Traktionsspannungsabschaltinformationen zu erzeugen. Bezüglich der Vorteile der erfindungsgemäßen Leitstelle sei auf die obigen Ausführungen im Zusammenhang mit der erfindungsgemäßen Anordnung verwiesen.

Die Erfindung bezieht sich darüber auf ein Verfahren zum Betreiben einer Anordnung, die eine streckenseitige Abschalteinrichtung, die bei Anliegen eines Abschaltsignals eine Traktionsspannung an einer Fahrzeugstrecke oder eines Abschnitts eines Streckennetzes abschaltet, und zumindest ein auf der Fahrzeugstrecke oder dem Abschnitt des Streckennetzes befindliches Fahrzeug umfasst.

Erfindungsgemäß ist bezüglich eines solchen Verfahrens vorgesehen, dass eine streckenseitige Leitstelle der Anordnung mit dem zumindest einen Fahrzeug in einer Kommunikationsverbindung steht und von diesem im Falle abgeschalteter Traktionsspannung eine Traktionsspannungsabschaltinformation erhält und die streckenseitige Leitstelle ein eine Traktionsspannungsfreiheit anzeigendes Freigabesignal in Abhängigkeit von einer oder mehreren Traktionsspannungsabschaltinformationen erzeugt.

Bezüglich der Vorteile des erfindungsgemäßen Verfahrens sei auf die obigen Ausführungen im Zusammenhang mit der erfindungsgemäßen Anordnung verwiesen.

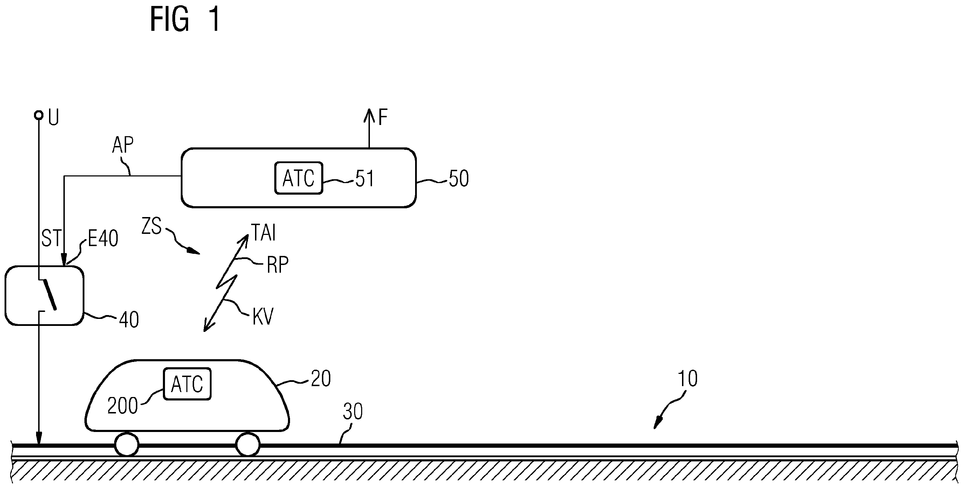

Die Erfindung wird nachfolgend anhand von Ausführungsbeispielen näher erläutert; dabei zeigen beispielhaft
- Figur 1: ein Ausführungsbeispiel für eine erfindungsgemäße Anordnung mit einer streckenseitigen Leitstelle und einem Fahrzeug, das im Falle abgeschalteter Traktionsspannung eine Traktionsspannungsabschaltinformation an die streckenseitige Leitstelle übersendet, wobei das Erzeugen eines Abschaltsignals zum Abschalten der Traktionsspannung leitstellenseitig erfolgt,

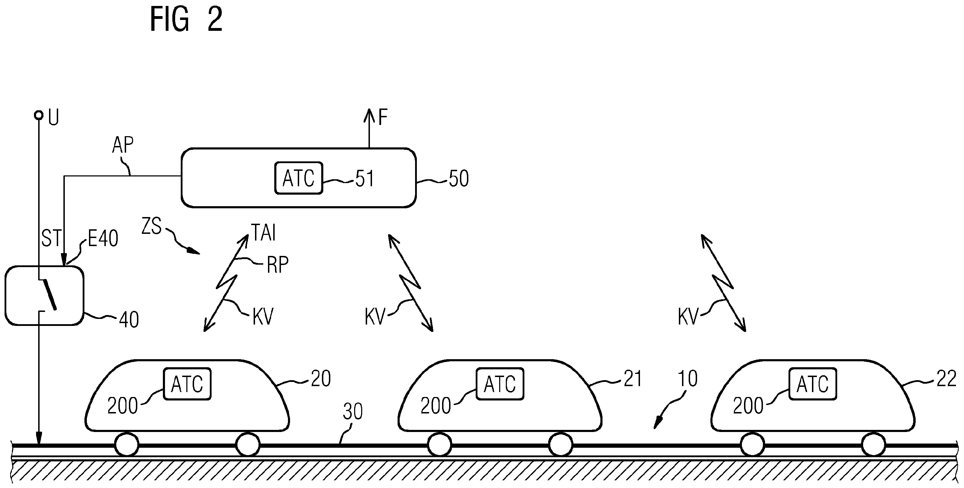

- Figur 2: ein Ausführungsbeispiel für eine erfindungsgemäße Anordnung, bei der in einem Abschnitt eines Streckennetzes mehrere Fahrzeuge vorhanden sind, die im Falle abgeschalteter Traktionsspannung jeweils eine Traktionsspanungsabschaltinformation an die streckenseitige Leitstelle übersenden und die Leitstelle ein Freigabesignal in Abhängigkeit von den eingangsseitig vorliegenden Traktionsspannungsabschaltinformationen erzeugt,

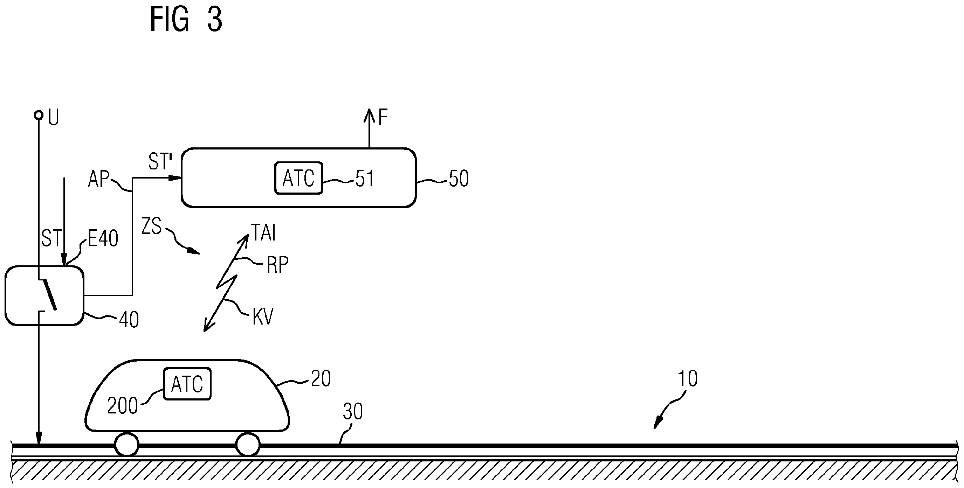

- Figur 3: ein Ausführungsbeispiel für eine erfindungsgemäße Anordnung, bei dem ein Abschaltsignal zum Abschalten der Traktionsspannung extern erzeugt wird und eine streckenseitige Leitstelle ein Freigabesignal in Abhängigkeit von dem Vorliegen einer Traktionsspannungsabschaltinformation eines Fahrzeugs erzeugt, und

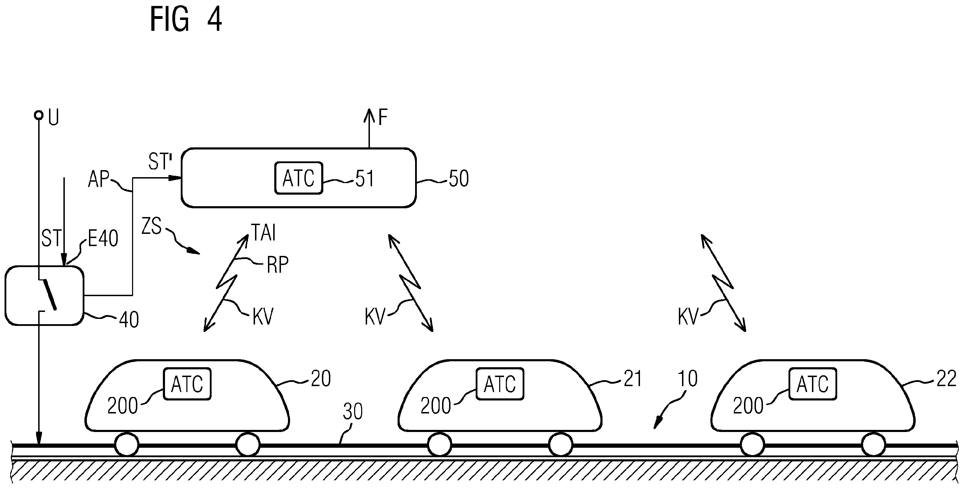

- Figur 4: eine Variante der Anordnung gemäß Figur 3, bei der die streckenseitige Leitstelle das Freigabesignal in Abhängigkeit von Traktionsspannungsabschaltinformationen zweier oder mehr Fahrzeuge erzeugt.

In den Figuren werden der Übersicht halber für identische oder vergleichbare Komponenten stets dieselben Bezugszeichen verwendet.

Die Figur 1 zeigt einen Abschnitt eines Streckennetzes 10, bei dem es sich vorzugsweise um ein Schienennetz, insbesondere ein Eisenbahnschienennetz, handelt. Auf dem Streckennetz 10 befindet sich ein elektrisch angetriebenes Fahrzeug 20, das vorzugsweise spurgebunden ist; vorzugsweise handelt es sich um ein elektrisch angetriebenes Schienenfahrzeug des Personennah- oder Personenfernverkehrs.

Die Energieversorgung des Fahrzeugs 20 erfolgt bei dem Ausführungsbeispiel gemäß Figur 1 durch eine Stromschiene 30, die über ein nicht weiter dargestelltes Energieversorgungsnetz mit einer Traktionsspannung U beaufschlagt ist. Die Traktionsspannung gelangt über eine Abschaltvorrichtung 40 zur Stromschiene 30.

Die Abschaltvorrichtung 40 steht über einen Abschaltpfad AP mit einer streckenseitigen Leitstelle 50 in Verbindung, die vorzugsweise ein leitstellenseitiges Zugkontroll- und/oder Zugsteuerungsmodul 51 umfasst. Das leitstellenseitige Zugkontroll- und/oder Zugsteuerungsmodul 51 wird fachsprachlich auch als ATC(ATC = Automatic Train Control)-Modul bezeichnet. Das leitstellenseitige Zugkontroll- und/oder Zugsteuerungsmodul 51 der Leitstelle 50 steht mit einem fahrzeugseitigen Zugkontroll- und/oder Zugsteuerungsmodul 200 des Fahrzeugs 20 über eine Kommunikationsverbindung KV in Verbindung. Die Kommunikationsverbindung KV kann auf Funkwellen und/oder auf einer streckenseitigen Übertragung beruhen, beispielsweise induktiv über eine Linienzugbeeinflussung (LZB), eine Punktzugbeeinflussung (z. B. Balisen) oder dergleichen.

Die beiden Module 200 und 51 sowie die Kommunikationsverbindung KV bilden ein Zugkontroll- und/oder Zugsteuerungssystem ZS, das ein automatisches bzw. leitstellengesteuertes Fahren des Fahrzeugs 20 in dem von der Leitstelle 50 überwachten Abschnitt des Streckennetzes 10 ermöglicht.

Bei dem Ausführungsbeispiel gemäß Figur 1 wird beispielhaft davon ausgegangen, dass das durch die beiden Module 200 und 51 und die Kommunikationsverbindung KV gebildete Zugkontroll- und/oder Zugsteuerungssystem ZS einen hohen Sicherheitsstandard erfüllt bzw. signaltechnisch sicher ist, insbesondere gemäß dem Sicherheitsstandard SIL4 oder besser.

Die in der Figur 1 dargestellte Anordnung kann beispielsweise wie folgt betrieben werden:
Soll die Stromschiene 30 vom Energieversorgungsnetz getrennt werden bzw. die Traktionsspannung U abgeschaltet werden, um beispielsweise eine streckenseitige Wartung durch Wartungspersonal im Bereich der Stromschiene 30 zu ermöglichen, so erzeugt die Leitstelle 50 ein Abschaltsignal ST, das über den Abschaltpfad AP zu einem Steuereingang E40 der Abschalteinrichtung 40 gelangt. Bei Vorliegen des Abschaltsignals ST am Steuereingang E40 schaltet die Abschalteinrichtung 40 die Traktionsspannung U ab, so dass die Stromschiene 30 spannungsfrei wird.

Nachfolgend wird beispielhaft davon ausgegangen, dass der Abschaltpfad AP einen geringeren Sicherheitsstandard als das durch die beiden Module 200 und 51 gebildete Zugkontroll- und/oder Zugsteuerungssystem ZS aufweist. Um sicherzustellen, dass die Leitstelle 50 ein Freigabesignal F, das die Traktionsspannungsfreiheit der Stromschiene 30 anzeigt, ausschließlich dann erzeugt, wenn eine signaltechnisch sichere bzw. mit einem hohen Sicherheitsstandard übertragene Rückmeldung zur Leitstelle 50 gelangt, wird vorzugsweise wie folgt vorgegangen:
Nach dem Erzeugen des Abschaltsignals ST wartet die Leitstelle 50 auf eine Traktionsspannungsabschaltinformation TAI, die nach Abschalten der Traktionsspannung von dem Fahrzeug 20 mittels des fahrzeugseitigen Zugkontroll- und/oder Zugsteuerungsmoduls 200 des Fahrzeugs 20 über die Kommunikationsverbindung KV zur Leitstelle 50 übermittelt wird. Erfolgt ein Empfang der Traktionsspannungsabschaltinformation TAI innerhalb einer vorgegebenen Zeitspanne nach dem Übermitteln des Abschaltsignals ST an die Abschalteinrichtung 40, so geht die Leitstelle 50 davon aus, dass die Stromschiene 30 tatsächlich traktionsspannungsfrei geschaltet worden ist und erzeugt das entsprechende Freigabesignal F, das die Spannungsfreiheit der Stromschiene 30 bestätigt und ein Betreten des Streckennetzes 10 im Bereich der Stromschiene 30 freigibt.

Bezüglich der Ausgestaltung des Fahrzeugs 20 kann vorgesehen sein, dass dieses unaufgefordert, sei es regelmäßig oder unregelmäßig, Statusinformationen an die Leitstelle 50 übersendet, die zumindest auch das Anliegen oder Fehlen der Traktionsspannung U betreffen. Bei einer solchen Ausgestaltung erhält die Leitstelle 50 also unaufgefordert, regelmäßig oder unregelmäßig, Mitteilungen darüber, ob die Stromschiene 30 mit Traktionsspannung beaufschlagt ist oder nicht. In einem solchen Fall kann sie nach einem Erzeugen des Abschaltsignals ST überwachen, ob das Eintreffen der Traktionsspannungsabschaltinformation TAI erfolgt, ohne diesbezüglich selbst tätig werden zu müssen.

Alternativ (oder auch zusätzlich) kann vorgesehen sein, dass die Leitstelle 50 während oder nach dem Erzeugen des Abschaltsignals ST ein Anfragesignal mittels des leitstellenseitigen Zugkontroll- und/oder Zugsteuerungsmoduls 51 über die Kommunikationsverbindung KV an das Fahrzeug 20 übersendet und anfragt, ob Traktionsspannung fahrzeugseitig vorhanden ist oder nicht. Übersendet nach einer solchen Aufforderung das Fahrzeug 20 die Traktionsspannungsabschaltinformation TAI mittels seines fahrzeugseitigen Zugkontroll- und/oder Zugsteuerungsmoduls 200, so geht die Leitstelle 50 davon aus, dass die Stromschiene 30 spannungsfrei geschaltet worden ist und erzeugt das entsprechende Freigabesignal F. Andernfalls wird die Leitstelle 50 kein Freigabesignal F erzeugen.

Bei der Anordnung gemäß Figur 1 bildet das Zugkontroll- und/oder Zugsteuerungssystem ZS bzw. die Kommunikationsverbindung KV zwischen der Leitstelle 50 und dem Fahrzeug 20 einen Rückmeldepfad RP, der signaltechnisch sicherer ist bzw. einen höheren Sicherheitsstandard aufweist als der Abschaltpfad AP. Das Freigabesignal F wird also ausschließlich dann erzeugt, wenn die aufgrund des hohen Sicherheitsstandards des Rückmeldepfads RP als sicher angesehene Rückmeldung über eben diesen Rückmeldepfad RP erfolgt, also unabhängig davon, welche Sicherheitsstufe der Abschaltpfad AP aufweist. Vorteilhaft ist es, wenn der Rückmeldepfad RP den Sicherheitsstandard SIL4 erfüllt.

Die Figur 2 zeigt eine weitere Anordnung mit einem Abschnitt eines Streckennetzes 10, einer Stromschiene 30, einer Abschalteinrichtung 40 sowie einer Leitstelle 50. Im Unterschied zu dem Ausführungsbeispiel gemäß Figur 1 wird das Streckennetz 10 von mehreren Fahrzeugen 20, 21 und 22 befahren, bei denen es sich um elektrisch betriebene Schienenfahrzeuge des Personennah- oder Personenfernverkehrs handelt.

Bei der Anordnung gemäß Figur 2 wird die Leitstelle 50 nach dem Erzeugen des Abschaltsignals ST auf die Rückmeldung der Traktionsspannungsfreiheit bzw. auf das Eingehen von Traktionsspannungsabschaltinformationen TAI von allen im Abschnitt des Streckennetzes 10 fahrenden Fahrzeugen 20, 21 und 22 warten. Nur dann, wenn eine vorgegebene Mindestzahl an Fahrzeugen mittels Traktionsspannungsabschaltinformationen TAI die Spannungsfreiheit der Stromschiene 30 bestätigt, wird die Leitstelle 50 das entsprechende Freigabesignal F erzeugen.

Die Mindestzahl an Traktionsspannungsabschaltinformationen TAI beträgt vorzugsweise zwei oder mehr.

Die Figur 3 zeigt ein Ausführungsbeispiel für eine Anordnung, die im Wesentlichen der Anordnung gemäß Figur 1 entspricht. Im Unterschied zu der Anordnung gemäß Figur 1 wird bei der Anordnung gemäß Figur 3 ein Abschaltsignal ST zum Abschalten der Traktionsspannung U extern, also nicht von der Leitstelle 50, erzeugt.

Bei der Anordnung gemäß Figur 3 ist die Abschalteinrichtung 40 derart ausgestaltet, dass sie nach Eintreffen eines Abschaltsignals ST das Vorliegen dieses Abschaltsignals ST mittels eines Meldesignals ST' über einen Abschaltpfad AP, der die Abschalteinrichtung 40 mit der Leitstelle 50 verbindet, an die Leitstelle 50 weiterleitet.

Die Leitstelle 50 wartet nach dem Vorliegen des Meldesignals ST' auf das Eintreffen der entsprechenden Traktionsspannungsabschaltinformation TAI des Fahrzeugs 20 und erzeugt nach Eingang der Traktionsspannungsabschaltinformation TAI das entsprechendes Freigabesignal F, sofern die Traktionsspannungsabschaltinformation TAI innerhalb einer vorgegebenen Zeitspanne nach dem Eintreffen des Meldesignals ST' eingeht.

Die Übermittlung der Traktionsspannungsabschaltinformation TAI erfolgt vorzugsweise über die Kommunikationsverbindung KV bzw. das Zugkontroll- und/oder Zugsicherungssystem ZS; diesbezüglich sei auf die obigen Ausführungen im Zusammenhang mit der Figur 1 verwiesen, die hier entsprechend gelten.

Die Figur 4 zeigt ein Ausführungsbeispiel für eine Anordnung, bei der ein Abschnitt eines Streckennetzes 10 von mehreren Fahrzeugen 20, 21 und 22 befahren wird. Im Falle eines Vorliegens eines externen Abschaltsignals ST erzeugt die Abschalteinrichtung 40 ein Meldesignal ST', das über den Abschaltpfad AP zur Leitstelle 50 übertragen wird, wie dies im Zusammenhang mit der Figur 3 oben bereits erläutert wurde.

Nach dem Eintreffen des Meldesignals ST' wartet die Leitstelle 50 auf das Eintreffen entsprechender Traktionsspannungsabschaltinformationen TAI von den Fahrzeugen 20, 21 und 22.

Sobald eine vorgegebene Mindestzahl von zwei oder mehr an Traktionsspannungsabschaltinformationen TAI bei der Leitstelle 50 eingeht, erzeugt diese ein Freigabesignal F, das die Spannungsfreiheit der Stromschiene 30 bestätigt. Diesbezüglich sei auf die obigen Ausführungen im Zusammenhang mit dem Ausführungsbeispiel gemäß Figur 2 verwiesen, die hier entsprechend gelten.

Die im Zusammenhang mit den Figuren 1 bis 4 beschriebenen Anordnungen bzw. die im Zusammenhang mit den Figuren 1 bis 4 beschriebenen Betriebsverfahren zeichnen sich zusammengefasst dadurch aus, dass der Abschaltpfad AP zum Übertragen des Abschaltsignals ST als solcher keinen besonders hohen Sicherheitsstandard erfüllen muss, da der für ein sicheres Erzeugen eines vertrauenswürdigen Freigabesignals F erforderliche oder gewünschte Sicherheitsstandard über den Rückmeldepfad RP gewährleistet werden kann. Der Rückmeldepfad RP steht bei heutzutage üblichen Zugkontroll- und/oder Zugsteuerungssystemen ZS standardmäßig zur Verfügung, so dass durch die Verwendung der Kommunikationsverbindung KV bzw. des Zugkontroll- und/oder Zugsteuerungssystems ZS auf besonders einfache Weise ein hoher Sicherheitsstandard auch bei der Erzeugung des Freigabesignals F erreicht werden kann.

Obwohl die Erfindung im Detail durch bevorzugte Ausführungsbeispiele näher illustriert und beschrieben wurde, so ist die Erfindung nicht durch die offenbarten Beispiele eingeschränkt. Der Schutzumfang der Erfindung ist durch die Merkmale der unabhängigen Ansprüche festgelegt.

## Patentansprüche

1. Anordnung mit einer streckenseitigen Abschalteinrichtung (40), die bei Anliegen eines Abschaltsignals (ST) eine an einer Fahrzeugstrecke oder an einem Abschnitt eines Streckennetzes (10) anliegende Traktionsspannung (U) abschaltet, und mit zumindest einem auf der Fahrzeugstrecke oder dem Abschnitt des Streckennetzes (10) befindlichen Fahrzeug (20, 21, 22),
**dadurch gekennzeichnet, dass**
- eine streckenseitige Leitstelle (50) der Anordnung mit dem zumindest einen Fahrzeug (20, 21, 22) in einer Kommunikationsverbindung (KV) steht und von diesem im Falle abgeschalteter Traktionsspannung (U) eine Traktionsspannungsabschaltinformation (TAI) erhält und
- die streckenseitige Leitstelle (50) derart ausgebildet ist, dass sie ein eine Traktionsspannungsfreiheit anzeigendes Freigabesignal (F) in Abhängigkeit von einer oder mehreren Traktionsspannungsabschaltinformationen (TAI) erzeugt.

2. Anordnung nach Anspruch 1,
**dadurch gekennzeichnet, dass** die streckenseitige Leitstelle (50) derart ausgebildet ist, dass sie das Freigabesignal (F) erzeugt, wenn eine Mindestanzahl an auf der Fahrzeugstrecke oder dem Abschnitt des Streckennetzes (10) befindlichen Fahrzeugen (20, 21, 22) eine Traktionsspannungsabschaltinformation (TAI) an die streckenseitige Leitstelle (50) sendet.

3. Anordnung nach einem der voranstehenden Ansprüche,
**dadurch gekennzeichnet, dass** die streckenseitige Leitstelle (50) derart ausgebildet ist, dass sie das Freigabesignal (F) nur erzeugt, wenn nach der Erzeugung des Abschaltsignals (ST) innerhalb einer vorgegebenen Zeitspanne eine Mindestanzahl an auf der Fahrzeugstrecke oder dem Abschnitt des Streckennetzes (10) befindlichen Fahrzeugen (20, 21, 22) eine Traktionsspannungsabschaltinformation (TAI) an die streckenseitige Leitstelle (50) senden.

4. Anordnung nach einem der voranstehenden Ansprüche 2 bis 3, **dadurch gekennzeichnet, dass** die Mindestanzahl 2 oder größer ist.

5. Anordnung nach einem der voranstehenden Ansprüche,
**dadurch gekennzeichnet, dass** die streckenseitige Leitstelle (50) derart ausgebildet ist, dass sie das Abschaltsignal (ST) selbst erzeugt und an die Abschalteinrichtung (40) übermittelt und nachfolgend den Empfang von Traktionsspannungsabschaltinformationen (TAI) der Fahrzeuge (20, 21, 22) überwacht.

6. Anordnung nach einem der voranstehenden Ansprüche,
**dadurch gekennzeichnet, dass**
- die streckenseitige Leitstelle (50) und die Abschalteinrichtung (40) einen Abschaltpfad (AP) bilden und
- die streckenseitige Leitstelle (50) und das zumindest eine Fahrzeug (20, 21, 22) einen Rückmeldepfad (RP).

7. Anordnung nach Anspruch 6,
**dadurch gekennzeichnet, dass**
- das zumindest eine Fahrzeug (20, 21, 22) ein spurgebundenes Fahrzeug (20, 21, 22), insbesondere ein Schienenfahrzeug ist und
- der Rückmeldepfad (RP) durch ein automatisches Zugkontroll- und/oder Zugsteuerungssystem (ZS) gebildet ist.

8. Anordnung nach einem der voranstehenden Ansprüche 6 bis 7, **dadurch gekennzeichnet, dass** der Rückmeldepfad (RP) signaltechnisch sicherer als der Abschaltpfad (AP) ist.

9. Anordnung nach einem der voranstehenden Ansprüche 6 bis 8, **dadurch gekennzeichnet, dass** der Rückmeldepfad (RP) zumindest den Sicherheitsstandard SIL4 erfüllt.

10. Anordnung nach einem der voranstehenden Ansprüche 6 bis 9,
**dadurch gekennzeichnet, dass** der Abschaltpfad (AP) den Sicherheitsstandard SIL4 unterschreitet.

11. Anordnung nach einem der voranstehenden Ansprüche,
**dadurch gekennzeichnet, dass** die durch den Abschaltpfad (AP) und den Rückmeldepfad (RP) gebildete Traktionsabschaltfunktionalität zumindest den Sicherheitsstandard SIL4 erfüllt.

12. Anordnung nach einem der voranstehenden Ansprüche,
**dadurch gekennzeichnet, dass** das oder die Fahrzeuge (20, 21, 22) derart ausgestaltet sind, dass sie unaufgefordert Statusinformationen an die Leitstelle (50) übersenden, die zumindest auch das Anliegen oder Fehlen von Traktionsspannung (U) betreffen.

13. Anordnung nach einem der voranstehenden Ansprüche,
**dadurch gekennzeichnet, dass** das oder die Fahrzeuge (20, 21, 22) derart ausgestaltet sind, dass sie nach Empfang einer leitzentralenseitigen Anfrage eine Statusinformation an die Leitstelle (50) übersenden, die zumindest auch das Anliegen oder Fehlen von Traktionsspannung (U) betrifft.

14. Leitstelle (50), insbesondere für eine Anordnung nach einem der voranstehenden Ansprüche,
**dadurch gekennzeichnet, dass**
- diese dazu ausgebildet ist, mit zumindest einem auf einer Fahrzeugstrecke oder einem Abschnitt eines Streckennetzes (10) befindlichen Fahrzeug (20, 21, 22) in einer Kommunikationsverbindung (KV) zu stehen und von diesem im Falle abgeschalteter Traktionsspannung (U) eine Traktionsspannungsabschaltinformation (TAI) zu erhalten sowie ein eine Traktionsspannungsfreiheit anzeigendes Freigabesignal (F) in Abhängigkeit von einer oder mehreren erhaltenen Traktionsspannungsabschaltinformationen (TAI) zu erzeugen.

15. Verfahren zum Betreiben einer Anordnung, die eine streckenseitige Abschalteinrichtung (40), die bei Anliegen eines Abschaltsignals (ST) eine Traktionsspannung (U) an einer Fahrzeugstrecke oder eines Abschnitts eines Streckennetzes (10) abschaltet, und zumindest ein auf der Fahrzeugstrecke oder dem Abschnitt des Streckennetzes (10) befindliches Fahrzeug (20, 21, 22) umfasst,
**dadurch gekennzeichnet, dass**
- eine streckenseitige Leitstelle (50) der Anordnung mit dem zumindest einen Fahrzeug (20, 21, 22) in einer Kommunikationsverbindung (KV) steht und von diesem im Falle abgeschalteter Traktionsspannung (U) eine Traktionsspannungsabschaltinformation (TAI) erhält und
- die streckenseitige Leitstelle (50) ein eine Traktionsspannungsfreiheit anzeigendes Freigabesignal (F) in Abhängigkeit von einer oder mehreren Traktionsspannungsabschaltinformationen (TAI) erzeugt.

## Claims

1. Arrangement having a lineside switch-off device (40),
which, when a switch-off signal (ST) is applied, switches off a traction voltage (U) applied to a vehicle route or to a section of a transport network (10), and having at least one vehicle (20, 21, 22) located on the vehicle route or the section of the transport network (10),
**characterised in that**
- a lineside control centre (50) of the arrangement has a communications link (KV) to the at least one vehicle (20, 21, 22) and, in the event that the traction voltage (U) is switched off, obtains traction voltage switch-off information (TAI) from the vehicle, and
- the lineside control centre (50) is configured in such a way that it generates an enable signal (F) indicating an absence of traction voltage as a function of one or more item(s) of traction voltage switch-off information (TAI).

2. Arrangement according to claim 1,
**characterised in that**
the lineside control centre (50) is configured in such a way that it generates the enable signal (F) when a minimum number of vehicles (20, 21, 22) located on the vehicle route or the section of the transport network (10) transmit traction voltage switch-off information (TAI) to the lineside control centre (50).

3. Arrangement according to one of the preceding claims,
**characterised in that**
the lineside control centre (50) is configured in such a way that it generates the enable signal (F) only if, after generation of the switch-off signal (ST), within a predetermined period of time, a minimum number of vehicles (20, 21, 22) located on the vehicle route or section of the transport network (10) transmit traction voltage switch-off information (TAI) to the lineside control centre (50).

4. Arrangement according to one of the preceding claims 2 to 3,
**characterised in that**
the minimum number is 2 or more.

5. Arrangement according to one of the preceding claims,
**characterised in that**
the lineside control centre (50) is configured in such a way that it generates the switch-off signal (ST) itself and transmits it to the switch-off device (40) and subsequently monitors the reception of traction voltage switch-off information (TAI) of the vehicles (20, 21, 22).

6. Arrangement according one of the preceding claims,
**characterised in that**
- the lineside control centre (50) and the switch-off device (40) form a switch-off path (AP) and
- the lineside control centre (50) and the at least one vehicle (20, 21, 22) a feedback path (RP).

7. Arrangement according to claim 6,
**characterised in that**
- the at least one vehicle (20, 21, 22) is a track-bound vehicle (20, 21, 22), in particular a rail vehicle and
- the feedback path (RP) is formed by an automatic train command system and/or train control system (ZS).

8. Arrangement according to one of the preceding claims 6 to 7,
**characterised in that**
the feedback path (RP) is safer for signalling purposes than the switch-off path (AP).

9. Arrangement according to one of the preceding claims 6 to 8,
**characterised in that**
the feedback path (RP) meets at least the safety standard SIL4.

10. Arrangement according to one of the preceding claims 6 to 9,
**characterised in that**
the switch-off path (AP) falls short of the safety standard SIL4.

11. Arrangement according to one of the preceding claims,
**characterised in that**
the traction switch-off functionality formed by the switch-off path (AP) and the feedback path (RP) meets at least the safety standard SIL4.

12. Arrangement according to one of the preceding claims,
**characterised in that**
the vehicle or vehicles (20, 21, 22) are configured in such a way that they transmit unsolicited status information to the control centre (50), which at least also relates to the presence or absence of traction voltage (U).

13. Arrangement according to one of the preceding claims,
**characterised in that**
one or more vehicles (20, 21, 22) are configured in such a way that, after receiving a control centre-side query, they transmit status information to the control centre (50), which at least also relates to the presence or absence of traction voltage (U).

14. Control centre (50), in particular for an arrangement as claimed in one of the preceding claims,
**characterised in that**
- this is configured to have a communications link (KV) to the at least one vehicle (20, 21, 22) located on a vehicle route or a section of a transport network (10) and, in the event that the traction voltage (U) is switched off, obtains traction voltage switch-off information (TAI) from the vehicle as well as to generate an enable signal (F) indicating an absence of traction voltage as a function of one or more item(s) of traction voltage switch-off information (TAI).

15. Method for operating an arrangement which comprises a lineside switch-off device (40), which, when a switch-off signal (ST) is applied, switches off a traction voltage applied to a vehicle route or to a section of a transport network (10), and comprises at least one vehicle (20, 21, 22) located on the vehicle route or the section of the transport network (10),
**characterised in that**
- a lineside control centre (50) of the arrangement has a communications link (KV) to the at least one vehicle (20, 21, 22) and, in the event that the traction voltage (U) is switched off, obtains traction voltage switch-off information (TAI) from the vehicle,
- the lineside control centre (50) generates an enable signal (F) indicating an absence of traction voltage as a function of one or more item(s) of traction voltage switch-off information (TAI).

## Revendications

1. Agencement comprenant un dispositif (40) de coupure du côté de la voie, qui, à l'application d'un signal (ST) de coupure, coupe une tension (U) de traction s'appliquant à une voie de véhicule ou à un tronçon d'un réseau (10) de voies, et comprenant au moins un véhicule (20, 21, 22) se trouvant sur la voie de véhicule ou le tronçon du réseau (10) de voies,
**caractérisé en ce que**
- un poste (50) de conduite de l'agencement du côté de la voie est en liaison (KV) de communication avec le au moins un véhicule (20, 21, 22) et en reçoit, dans le cas d'une tension (U) de traction coupée, une information (TAI) de coupure de la tension de traction et
- le poste (50) de conduite du côté de la voie est constitué de manière à produire, en fonction d'une ou de plusieurs informations (TAI) de coupure de la tension de traction, un signal (F) de validation indiquant une exemption de tension de traction.

2. Agencement suivant la revendication 1,
**caractérisé en ce que**
le poste (50) de conduite du côté de la voie est constitué de manière à produire le signal (F) de validation, si un nombre minimum de véhicules (20, 21, 22), se trouvant sur la voie de véhicule ou sur le tronçon du réseau (10) de voies, envoie une information (TAI) de coupure de la tension de traction au poste (50) de conduite du côté de la voie.

3. Agencement suivant l'une des revendications précédentes,
**caractérisé en ce que**
le poste (50) de conduite du côté de la voie est constitué de manière à ne produire le signal (F) de validation que si, après la production du signal (ST) de coupure dans un laps de temps donné à l'avance, un nombre minimum de véhicules (20, 21, 22), se trouvant sur la voie de véhicule ou sur le tronçon du réseau (10) de voies, envoie une information (TAI) de coupure de la tension de traction au poste (50) de conduite du côté de la voie.

4. Agencement suivant l'une des revendications 2 à 3 précédentes,
**caractérisé en ce que**
le nombre minimum est de 2 ou plus grand que 2.

5. Agencement suivant l'une des revendications précédentes,
**caractérisé en ce que**
le poste (50) de conduite du côté de la voie est constitué de manière à produire soi-même le signal (ST) de coupure et à l'envoyer au dispositif (40) de coupure et ensuite à contrôler la réception des informations (TAI) de coupure de la tension de traction des véhicules (20, 21, 22).

6. Agencement suivant l'une des revendications précédentes,
**caractérisé en ce que**
- le poste (50) de conduite du côté de la voie et le dispositif (40) de coupure forment un trajet (AP) de coupure et
- le poste (50) de conduite du côté de la voie et le au moins un véhicule (20, 21, 22) forment un trajet (RP) d'accusé de réception.

7. Agencement suivant la revendication 6,
**caractérisé en ce que**
- le au moins un véhicule (20, 21, 22) est un véhicule (20, 21, 22) guidé sur rail, notamment un véhicule ferroviaire et
- le trajet (RP) d'accusé de réception est formé par un système (ZS) automatique de contrôle et/ou de commande de train.

8. Agencement suivant l'une des revendications 6 à 7 précédentes,
**caractérisé en ce que**
le trajet (RP) d'accusé de réception est en technique du signal plus sûr que le trajet (AP) de coupure.

9. Agencement suivant l'une des revendications 6 à 8 précédentes,
**caractérisé en ce que**
le trajet (RP) d'accusé de réception satisfait au moins la norme de sécurité SIL4.

10. Agencement suivant l'une des revendications 6 à 9 précédentes,
**caractérisé en ce que**
le trajet (AP) de coupure est en dessous de la norme de sécurité SIL4.

11. Agencement suivant l'une des revendications précédentes,
**caractérisé en ce que**
la fonctionnalité de coupure de traction, formée par le trajet (AP) de coupure et le trajet (RP) d'accusé de réception, satisfait au moins la norme de sécurité SIL4.

12. Agencement suivant l'une des revendications précédentes,
**caractérisé en ce que**
le véhicule ou les véhicules (20, 21, 22) sont conformés de manière à transmettre au poste (5) de conduite des informations de statut non demandées, qui concernent, au moins également, la présence ou l'absence de la tension (U) de traction.

13. Agencement suivant l'une des revendications précédentes,
**caractérisé en ce que**
le véhicule ou les véhicules (20, 21, 22) sont conformés de manière à envoyer au poste (50) de conduite, après la réception d'une requête de la part d'une centrale de conduite, une information de statut, qui concerne au moins la présence ou l'absence de la tension (U) de traction.

14. Poste (50) de conduite, notamment pour un agencement suivant l'une des revendications précédentes,
**caractérisé en ce que**
- il est constitué pour être dans une liaison (KV) de communication avec au moins un véhicule (20, 21, 22), se trouvant sur une voie de véhicule ou sur un tronçon d'un réseau (10) de voies et pour en recevoir, dans le cas où la tension (U) de traction est coupée, une information (TAI) de coupure de la tension de traction, ainsi que pour produire, en fonction d'une ou de plusieurs informations (TAI) de coupure de la tension de traction, un signal (F) de validation indiquant une exemption de tension de traction.

15. Procédé pour faire fonctionner un agencement, qui comprend un dispositif (40) de coupure du côté de la voie, qui, à l'application d'un signal (ST) de coupure, coupe une tension (U) de traction sur une voie de véhicule ou sur un tronçon d'un réseau (10) de voies, et au moins un véhicule (20, 21, 22) se trouvant sur la voie de véhicule ou sur le tronçon du réseau (10) de voies,
**caractérisé en ce que**
- un poste (50) de conduite de l'agencement du côté de la voie est en liaison (KV) de communication avec le au moins un véhicule (20, 21, 22) et en reçoit, dans le cas d'une tension (U) de traction coupée, une information (TAI) de coupure de la tension de traction et
- le poste (50) de conduite du côté de la voie produit, en fonction d'une ou de plusieurs informations (TAI) de coupure de la tension de traction, un signal (F) de validation indiquant une exemption de tension de traction.
